(19) **Europäisches Patentamt**

**European Patent Office**

**Office européen des brevets**

(11) **EP 1 586 027 B1**

(12) **EUROPEAN PATENT SPECIFICATION**

(45) Date of publication and mention
of the grant of the patent:
**30.08.2006 Bulletin 2006/35**

(51) Int Cl.:
***G06F 7/544*** (2006.01)

(21) Application number: **03810550.8**

(22) Date of filing: **07.10.2003**

(86) International application number:
**PCT/IB2003/004483**

(87) International publication number:
**WO 2004/042555 (21.05.2004 Gazette 2004/21)**

(54) **SUPERPOSITION OF WAVES USING THE CORDIC ALGORITHM**

BERLAGERUNG VON WELLEN UNTER VERWENDUNG DES CORDIC-ALGORITHMUS

COMPOSITION DE MULTI-ONDES

(84) Designated Contracting States:
**AT BE BG CH CY CZ DE DK EE ES FI FR GB GR
HU IE IT LI LU MC NL PT RO SE SI SK TR**

(30) Priority: **04.11.2002 EP 02079604**

(43) Date of publication of application:
**19.10.2005 Bulletin 2005/42**

(73) Proprietor: **Koninklijke Philips Electronics N.V.
5621 BA Eindhoven (NL)**

(72) Inventor: **HUISKEN, Josephus, A.
NL-5656 AA Eindhoven (NL)**

(74) Representative: **Eleveld, Koop Jan
Philips Intellectual Property & Standards,
P.O. Box 220
5600 AE Eindhoven (NL)**

(56) References cited:
**US-A- 4 910 698**

**Description**

The invention as defined in claim 1, relates to a method for creating an electronic signal composed by superposition of N waves using a Coordinate Rotation Digital Computer (CORDIC).

The invention as further defined in claims 6, 7 and 9 relates to a circuit arrangement comprising a CORDIC, a software product implementing a CORDIC and the use of a CORDIC.

Background Art

A Coordinate Rotation Digital Computer (CORDIC), introduced by Jack Volder, "The CORDIC trigonometric computing technique", IRE Trans. Electron. Comput., vol. EC-8, no. 3, pp. 330-334, Sept. 1959, is a computing technique to solve relationships involved in plane coordinate rotation.

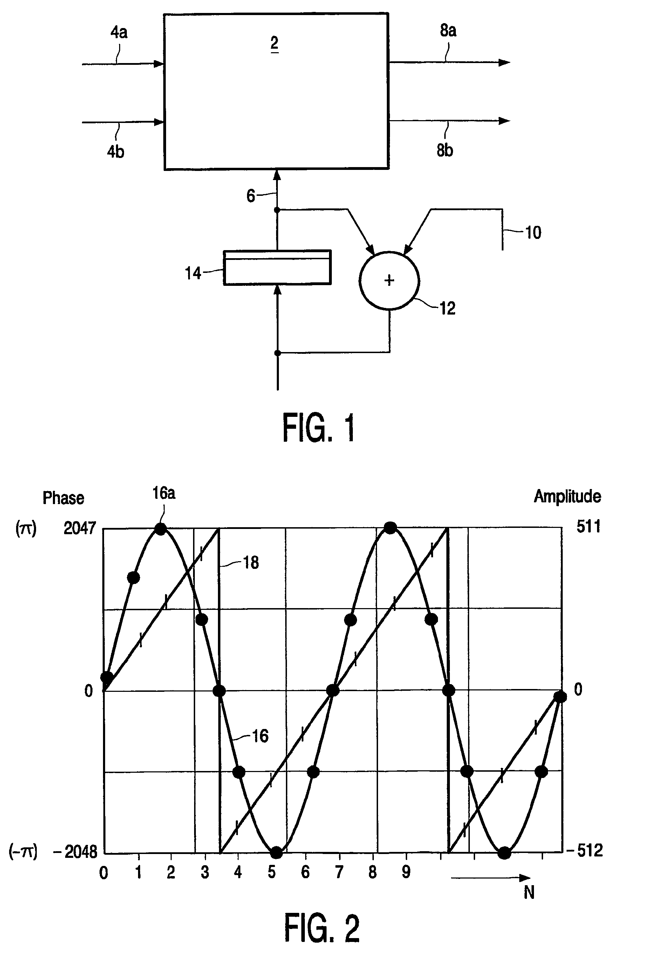

By calculating coordinate rotation, digital sine and cosine waves may be generated. Figure 1 depicts a circuit arrangement with a CORDIC 2 for digital generation of a harmonic sine or cosine wave. The CORDIC 2 comprises inputs 4 for cartesian vector coordinates $X_{in}$ and $Y_{in}$. The circuit arrangement further comprises input 6 for receiving a phase value PH, and outputs 8 for putting out rotated cartesian vector coordinates $X_{out}$ and $Y_{out}$. The coordinates $X_{in}$ and $Y_{in}$ represent a vector P with the magnitude of $(X_{in}^2+Y_{in}^2)^{-1/2}$. The initial angle by which the input vector will be rotated is given by phase value PH_init. By applying a phase value PH_init to a CORDIC, an extra rotation of a vector may be the result. To generate a wave with a certain frequency, the phase value PH may be accumulated by an offset value $\Delta$PH. One of the values $X_{in}$, $Y_{in}$, and PH may be set to zero, as it is redundant.

To create output values $X_{out}$ and $Y_{out}$ representing a sine or cosine wave, the phase input PH has to be increased with every clock cycle by the phase offset value $\Delta$PH. This phase offset value is fed to the circuit arrangement at input 10. Phase value PH is the digital phase information of the sine and cosine output signals. The phase value is generated by an accumulator 12, which adds the $\Delta$PH value to the current phase value PH. The cumulated phase value PH+$\Delta$PH is stored in register 14 for the next calculation step. To avoid sign errors, the phase data should range over $2\pi$rad. An initial phase value PH_init is fed to input 6 at the start of calculating the rotation of the vector represented by $X_{in}$, $Y_{in}$, and PH_init. Every calculation step the CORDIC calculates:

$$\begin{bmatrix} X_{out} \\ Y_{out} \end{bmatrix} = C * e^{j*PH} * \begin{bmatrix} X_{in} \\ Y_{in} \end{bmatrix}$$

in which C is constant, preferably close to 1. In the initial step the CORDIC calculates:

$$\begin{bmatrix} X_{out} \\ Y_{out} \end{bmatrix} = C * e^{j*PH_{init}} * \begin{bmatrix} X_{in} \\ Y_{in} \end{bmatrix}$$

In the next step the CORDIC calculates

$$\begin{bmatrix} X_{out} \\ Y_{out} \end{bmatrix} = C * e^{j*(PH_{init} + \Delta PH)} * \begin{bmatrix} X_{in} \\ Y_{in} \end{bmatrix}$$

The value $\Delta$PH together with the time a calculation step takes, determines the frequency of the sine or cosine wave.

Figure 2 depicts a sine waveform 16, being formed by interpolating discrete values 16a. The corresponding phase value 18 of that sine wave 16, as might be put out by the CORDIC 2 is also depicted. In case the phase offset value $\Delta$PH is 1 in the two's complement code representation, with 12 bit code, 4096 discrete samples of values 16a are needed to generate one sine wave period. In this case the output frequency is 1/4096 of the clock frequency. If $\Delta$PH is 2048, only two samples are needed for a full period.

There is the need for creation of waveforms composed of multiple waves, as with multiple sine and/or cosine waves, with different frequencies and phases, it is possible to generate any waveform possible by superposition. In particular in audio and/or speech coders/decoders, the generation of different waveforms is a performance critical task. To generate these waveforms, many CORDICS may be used, each generating a different sine wave, being superpositioned at the output to one composed waveform.

This approach is cost intensive. The required hardware for complex composite waveforms is huge.

US 4,910,698 discloses a CORDIC processor, creating a multi-tone signal with a plurality of frequencies, phases and amplitudes. Successive tones of the multi-tone signal are generated by time multiplexing a single CORDIC processor.

Invention

Therefore it is an object of the invention to provide a cost-effective method for multiple waveform composition by using a CORDIC. It is a further object of the invention to provide a power-effective method. It is yet a further aspect of the invention to reduce silicon area on a chip. It is still a further object of the invention to provide an easy software implementation for multiple waveform composition.

These objects of the invention are solved by a method for creating a waveform composed by superposition of N waves using a Coordinate Rotation Digital Computer (CORDIC), where said CORDIC calculates within N calculating steps discrete values of said N waves, and where said output of said discrete values from said CORDIC is cumulated with previous outputs of discrete values to form a composed discrete value of said waveform.

It is one feature of the invention to use one single CORDIC to generate different waveforms, in particular by superpositioning sine and cosine waves. Instead of providing for each wave a set of the values $X_{in}$, $Y_{in}$, PH and $\Delta$PH to a single CORDIC, respectively, these sets are provided during N calculation steps to one CORDIC. After N calculation steps N discrete values for N different waves are calculated. During each calculation step a value $X_{in}$, $Y_{in}$, and PH is provided to the CORDIC for one single wave. $X_{in}$, $Y_{in}$, and PH_init are redundant, so that one value may be omitted. The corresponding discrete values $X_{out}$, $Y_{out}$ are put out. The output is cumulated with previous outputs. After N calculation steps, the cumulated output represents one discrete value for the composite waveform, which may be generated by interpolating all discrete values. The number N of different waves for the composition of said waveform may vary between 2 and 100, but is not limited to that range and may be much larger, in particular in case the clock frequency of CORDICs rises in the future.

To provide N different $X_{in}$ and $Y_{in}$, and PH_init, where one value may be omitted due to redundancy, a method according to claim 2 is proposed. PH_init may be set to zero. The queue provides with each calculation step a new input value $X_{in}$ and $Y_{in}$ for the respective wave. The queue values are fed in a round-robin manner with a period ofN to the inputs of said CORDIC. Thus after N calculation steps, the first value is again fed to the input of the CORDIC, in case of phase offsets, a cumulated first value.

To provide phase values of each wave to the CORDIC, a method according to claim 3 is proposed. This queue provides during the first N calculation steps N phase values to initialise the CORDIC for the respective wave.

A method according to claim 4, provides for rotation of each input vector. After a phase value is fed to the CORDIC, this value is increased by $\Delta$PH and fed back to the input of the queue. After N calculation steps, the CORDIC is fed with an increased phase information PH+$\Delta$PH, such that the input vector may be rotated by an angle increased by $\Delta$PH. The phase offset value $\Delta$PH may differ for each of the N vectors between any negative value to any positive value, preferably in the range of -$\pi$ rad < $\Delta$PH < $\pi$ rad.

According to a method according to claim 5, within MxN calculating steps a full period of a composite waveform is calculated with M discrete values. These M discrete values of the composite waveform are each composed by N discrete values ofN different waves calculated by said CORDIC.

A further aspect of the invention is a circuit arrangement, in particular with a pre-described method, comprising a CORDIC with an amplitude input, a phase input and an output, where a first queue ofN amplitude values is coupled to said amplitude input, a second queue ofN phase values is coupled to said phase input, a third queue ofN frequency values is together with the output of said second queue coupled to an adder, and where the output of said adder is coupled to the input of said second queue. The queues might be shift registers or memory devices, each carrying N values and providing with each calculation step a new value to the CORDIC. The queues might be fed back, so that their output is again fed to their input in a round-robin manner.

A feedback circuit according to claim 7 is preferred, as this circuit allows for accumulation of N discrete values of N different waves to generate an discrete value of a composite wave.

A further aspect of the invention is a software for implementing a pre-described method. It is further preferred that discrete values are calculated based on integer arithmetic. The software implementation allows, for example, speech and audio coding/decoding, such as MPEG coding/decoding, within a microcomputer.

The use of a pre-described method, a pre-described circuit arrangement or a pre-described software for sine/ cosine wave composition, sinussoidal coding/decoding, parametric audio and/or video coders/decoders, and/or mobile communication devices is a further aspect of the invention. In sinussoidal coding in parametric audio decoders, it might be useful to calculate within 50 calculation steps 50 different waves to compose a composite waveform.

These and other aspects of the invention will be apparent from and elucidated with reference to the figures. In the figures show:

Fig. 1 a prior art CORDIC;
Fig. 2 a sine waveform;
Fig. 3 a CORDIC according to the invention.

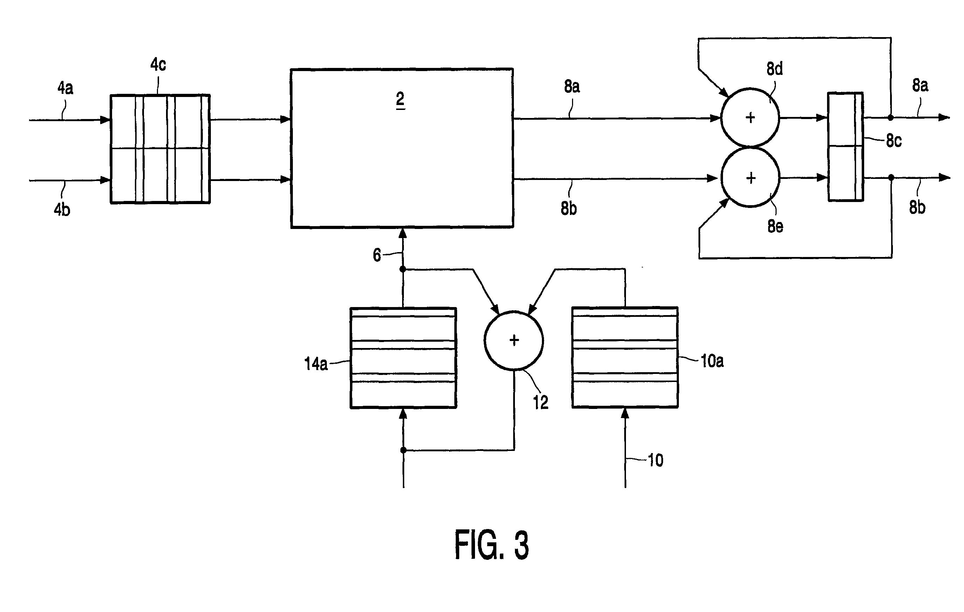

Figure 3 depicts a circuit arrangement with a CORDIC 2 according to the invention. In addition to Figure 1, Figure 3 depicts a first queue 4c for input values $X_{in}$ and $Y_{in}$, a second queue 14a for phase values PH and a third queue 10a for phase offset signals $\Delta$PH. The value PH_init may be set to zero. In case PH_init is different than zero, there may be a further queue for this value. Further depicted are accumulators 8a and 8e and register 8c. The circuit arrangement works as follows:

Each queue 4c, 10a, 14a has, for example, 50 slots. Within queue 4c each slots holds an initial value $X_{in}$ for a vector representing the amplitude of one sine wave. Thus 50 different amplitudes of sine waves may be provided. Queue 14a comprises 50 phase values PH for the respective 50 sine waves, and queue 10a holds 50 phase offset values $\Delta$PH to determine the phase shift for each of said 50 vectors during one calculation step for this vector. This phase offset value $\Delta$PH also determines the frequency of the respective sine waves.

The input vector for each sine wave is rotated by the value PH and an output vector in cartesian coordinates $X_{out}$ and $Y_{out}$ is put out. This is done for each of said 50 input values. The output vectors are accumulated in accumulators 18d, and 18e. After 50 calculation steps, the accumulated output vector represents one discrete value of a composed waveform.

With each calculation step, the phase value PH is increased by $\Delta$PH, for each wave, respectively. The new phase value PH+$\Delta$PH is fed to the input of queue 14a. After 50 calculation steps, the new phase value PH+$\Delta$PH is fed to CORDIC 2. By that, the input vector is rotated by an increased angle. After MxN calculation steps, each phase value is PH+Mx$\Delta$PH. M is determined such that the composite waveform is at least one period long. After MxN calculation steps the next period of the composite waveform may be calculated.

By cumulating the discrete output values, all sine waves are superpositioned to form the composite waveform. Each discrete value of the composite waveform is calculated within N calculation steps. Thereafter, the next discrete value is calculated until a whole period of the composite waveform is calculated.

By using one single CORDIC, the calculation of composite waveforms is cost effective, power effective and may be applied to a plurality of speech and audio decoders, such as MPEG4 parametric (sinusoidal) coding.

## Claims

1. Method for creating an electronic signal composed by superposition ofN waves using a Coordinate Rotation Digital Computer (CORDIC), where said CORDIC calculates within N calculating steps discrete values of said N waves, **characterized in that** said output vectors of said discrete values from said CORDIC are cumulated with previous output vectors of discrete values to form a composed discrete value of said electronic signal.

2. Method according to claim 1, **characterized in that** with each of said N calculating steps an output of a first queue of N amplitude values of said N waves is fed to an amplitude input of said CORDIC.

3. Method according to claim 1, **characterized in that** with each of said N calculating steps an output of a second queue of N phase values of said N waves is fed to a phase input of said CORDIC.

4. Method according to claim 1, **characterized in that** with each of said N calculating steps an output of a third queue of N phase offset values for said N waves is cumulated to the output of said second queue of N phase values and the cumulated result is fed back to an input of said third queue of phase values, such that after N calculating steps said third queue comprises N phase values cumulated with phase offset values.

5. Method according to claim 1, **characterized in that** within MxN calculating steps M discrete values of said waveform at least providing one full period of said waveform are calculated.

**6.** Circuit arrangement for creating an electronic signal composed by superposition of N waves, comprising a CORDIC with an amplitude input, a phase input and an output, where a first queue of N amplitude values is coupled to said amplitude input, a second queue of N phase values is coupled to said phase input, a third queue ofN frequency values is together with the output of said second queue coupled to an adder, where the output of said adder is coupled to the input of said second queue, **characterized by** a feedback circuit coupled to said outputs of said CORDIC, said feedback circuit providing accumulation of N output vectors said CORDIC to genemte a composed discrete value of said electronic signal.

**7.** Software implementing a method according to claim 1.

**8.** Software according to claim 7, **characterized in that** said discrete values are calculated based on integer arithmetic.

**9.** Use of a method according to claim 1, a circuit arrangement according to claim 6 or a software according to claim 7 for sinewave composition, sinussoidal coding/decoding, parametric audio and/or video coders/decoders, and/or mobile communication devices.


**Patentansprüche**

**1.** Verfahren zum Erzeugen eines elektronischen Signals, das durch Überlagerung von N Wellen unter Verwendung eines Coordinate Rotation Digital Computer (CORDIC) zusammengesetzt ist, wobei der CORDIC innerhalb von N Berechnungsschritten diskrete Wert der N Wellen berechnet, **dadurch gekennzeichnet, dass** die Ausgangsvektoren der diskreten Werte vom CORDIC mit vorangehenden Ausgangsvektoren diskreter Werte kumuliert werden, um einen zusammengesetzten diskreten Wert des elektronischen Signals zu bilden.

**2.** Verfahren nach Anspruch 1, **dadurch gekennzeichnet, dass** bei jedem der N Berechnungsschritte ein Ausgang einer ersten Warteschlange von N Amplitudenwerten der N Wellen zu einem Amplitudeneingang des CORDIC geführt wird.

**3.** Verfahren nach Anspruch 1, **dadurch gekennzeichnet, dass** bei jedem der N Berechnungsschritte ein Ausgang einer zweiten Warteschlange von N Phasenwerten der N Wellen zu einem Phaseneingang des CORDIC geführt wird.

**4.** Verfahren nach Anspruch 1, **dadurch gekennzeichnet, dass** bei jedem der N Berechnungsschritte ein Ausgang einer dritten Warteschlange von N Phasenverschiebungswerten für die N Wellen zum Ausgang der zweiten Warteschlange von N Phasenwerten kumuliert wird und das kumulierte Ergebnis zu einem Eingang der dritten Warteschlange von Phasenwerten zurückgeführt wird, sodass nach N Berechnungsschritten die dritte Warteschlange N Phasenwerte umfasst, die mit Phasenverschiebungswerten kumuliert sind.

**5.** Verfahren nach Anspruch 1, **dadurch gekennzeichnet, dass** in MxN Berechnungsschritten M diskrete Werte der Wellenform berechnet werden, die mindestens eine volle Periode der Wellenform bereitstellen.

**6.** Schaltungsanordnung zum Erzeugen eines elektronischen Signals, das durch Überlagerung von N Wellen zusammengesetzt ist, die einen CORDIC mit einem Amplitudeneingang, einem Phaseneingang und einem Ausgang umfasst, wobei eine erste Warteschlange von N Amplitudenwerten mit dem Amplitudeneingang gekoppelt ist, eine zweite Warteschlange von N Phasenwerten mit dem Phaseneingang gekoppelt ist, eine dritte Warteschlange von N Frequenzwerten gemeinsam mit dem Ausgang der zweiten Warteschlange mit einem Addierer gekoppelt ist, wobei der Ausgang des Addierers mit dem Eingang der zweiten Warteschlange gekoppelt ist, **gekennzeichnet durch** eine Rückführungsschaltung, die mit den Ausgängen des CORDIC gekoppelt ist, wobei die Rückführungsschaltung Akkumulation von N Ausgangsvektoren des CORDIC bereitstellt, um einen zusammengesetzten diskreten Wert des elektronischen Signals zu generieren.

**7.** Software, die ein Verfahren nach Anspruch 1 implementiert.

**8.** Software nach Anspruch 7, **dadurch gekennzeichnet, dass** die diskreten Werte basierend auf ganzzahliger Arithmetik berechnet werden.

**9.** Verwendung eines Verfahrens nach Anspruch 1, einer Schaltungsanordnung nach Anspruch 6 oder einer Software nach Anspruch 7 zur Zusammensetzung von Sinuswellen, Sinuscodierung und -decodierung, für parametrische Audio- und/oder Videocodierer und -decodierer und/oder Mobilkommunikationseinrichtungen.

**Revendications**

1. Procédé pour créer un signal électronique composé par superposition de N ondes en utilisant un Calculateur Numérique de Rotation de Coordonnées (CORDIC : Coordinate Rotation Digital Computer), dans lequel ledit calculateur CORDIC calcule en N étapes de calcul des valeurs discrètes desdites N ondes, **caractérisé en ce que** lesdits vecteurs de sortie desdites valeurs discrètes dudit calculateur CORDIC sont cumulées avec des vecteurs de sorties précédentes de valeurs discrètes pour former une valeur discrète composée dudit signal électronique.

2. Procédé selon la revendication 1, **caractérisé en ce qu'**à chacune desdites N étapes de calcul, une sortie d'une première file d'attente de N valeurs d'amplitude desdites N ondes est appliquée à une entrée d'amplitude dudit calculateur CORDIC.

3. Procédé selon la revendication 1, **caractérisé en ce qu'**à chacune desdites N étapes de calcul, une sortie d'une deuxième file d'attente de N valeurs de phase desdites N ondes est appliquée à une entrée de phase dudit calculateur CORDIC.

4. Procédé selon la revendication 1, **caractérisé en ce qu'**à chacune desdites N étapes de calcul, une sortie d'une troisième file d'attente de N valeurs de décalage de phase pour lesdites N ondes est cumulée avec la sortie de ladite deuxième file d'attente de N valeurs de phase et **en ce que** le résultat cumulé est réinjecté à une entrée de ladite troisième file d'attente de valeurs de phase, de façon à ce qu'après N étapes de calcul, ladite troisième file d'attente comprenne N valeurs de phase cumulées avec des valeurs de décalage de phase.

5. Procédé selon la revendication 1, **caractérisé en ce qu'**en MxN étapes de calcul, M valeurs discrètes de ladite forme d'onde constituant au moins une période complète de ladite forme d'onde, sont calculées.

6. Dispositif de circuit pour créer un signal électronique composé par superposition de N ondes, comprenant un calculateur CORDIC ayant une entrée d'amplitude, une entrée de phase et une sortie, dans lequel une première file d'attente de N valeurs d'amplitude est reliée à ladite entrée d'amplitude, en ce qu'une deuxième file d'attente de N valeurs de phase est reliée à ladite entrée de phase, en ce qu'une troisième file d'attente de N valeurs de fréquence est reliée, en association avec la sortie de ladite deuxième file d'attente, à un additionneur, la sortie dudit additionneur étant reliée à l'entrée de ladite deuxième file d'attente, **caractérisé par** un circuit de contre-réaction relié auxdites sorties dudit calculateur CORDIC, ledit circuit de contre-réaction assurant l'accumulation de N vecteurs de sortie dudit calculateur CORDIC pour générer une valeur discrète composée dudit signal électronique.

7. Logiciel mettant en oeuvre un procédé selon la revendication 1.

8. Logiciel selon la revendication 7, **caractérisé en ce que** lesdites valeurs discrètes sont calculées sur la base d'une arithmétique entière.

9. Utilisation d'un procédé selon la revendication 1, d'un dispositif de circuit selon la revendication 6 ou d'un logiciel selon la revendication 7 pour la composition d'ondes sinusoïdales, pour le codage/décodage sinusoïdal, pour des codeurs/décodeurs paramétriques audio et/ou vidéo, et/ou pour des dispositifs de communication mobiles.

## FIG. 1

## FIG. 2

FIG. 3